(19) **Europäisches Patentamt / European Patent Office / Office européen des brevets**

(11) **EP 1 922 776 B1**

(12) **EUROPÄISCHE PATENTSCHRIFT**

(45) Veröffentlichungstag und Bekanntmachung des Hinweises auf die Patenterteilung:
**04.04.2012  Patentblatt 2012/14**

(21) Anmeldenummer: **06806753.7**

(22) Anmeldetag: **06.09.2006**

(51) Int Cl.:
**H01M 2/02** (2006.01)          **H01M 2/20** (2006.01)

(86) Internationale Anmeldenummer:
**PCT/EP2006/066053**

(87) Internationale Veröffentlichungsnummer:
**WO 2007/028803 (15.03.2007 Gazette 2007/11)**

(54) **SPEZIAL LITHIUM-POLYMER-BATTERIEN, SPEZIELLE ANORDNUNGEN DAVON UND VERFAHREN ZUR HERSTELLUNG DERSELBEN**

SPECIAL PURPOSE LITHIUM POLYMER BATTERIES SPECIAL PURPOSE ARRANGEMENTS AND METHOD FOR PRODCUTION THEREOF

PILES LITHIUM-POLYMERE PARTICULIERES, ENSEMBLES PARTICULIERS DE TELLES PILES ET PROCEDE POUR LEUR PRODUCTION

(84) Benannte Vertragsstaaten:
**CZ ES FR NL**

(30) Priorität: **06.09.2005  DE 102005042169**

(43) Veröffentlichungstag der Anmeldung:
**21.05.2008  Patentblatt 2008/21**

(73) Patentinhaber: **Dilo Trading AG**
**6300 Zug (CH)**

(72) Erfinder: **NAARMANN, Herbert**
**67227 Frankenthal (DE)**

(74) Vertreter: **TBK**
**Bavariaring 4-6**
**80336 München (DE)**

(56) Entgegenhaltungen:
| | |
|---|---|
| **WO-A-99/05747** | **WO-A2-03/012908** |
| **JP-A- 2002 351 583** | **US-A- 5 104 752** |
| **US-A- 5 662 497** | **US-A- 5 998 060** |
| **US-B1- 6 187 469** | |

EP 1 922 776 B1

## Beschreibung

Die Anmeldung beschreibt spezielle Lithium-Polymer-Batterien, spezielle Anordnungen davon und das Verfahren zur Herstellung derselben.

Die zur Zeit auf dem Markt befindlichen Batterien sind standardisiert in Form, Länge, Breite, Durchmesser, Leistung etc, und füllen je nach Einsatzform- und art definierte Hohlräume aus, außerdem ergeben sich beim Zusammenschalten - in Reihe oder parallel - erhebliche Probleme - vor allem wegen der Hitzeentwicklung und damit verbundenem Leistungsabfall und der kontinuierlichen und sicheren Abfuhr der Wärme. Vor allem bei Batterien sog. High power cells mit z.B. 42 V /28 Ah oder 3,6 V /27 Ah oder mit noch höheren Leistungs- bzw. Energiedichten gelangt man in riskante Sicherheitsbereiche, da diese Kraflpakete nur relativ aufwändig in die jeweiligen Nutzaggregate integrierbar sind.

Im Stand der Technik sind zylindrische Batterien bekannt, die eine Vielzahl von Polymerelektrolytzellen umfassen. So offenbart die US 6,187,469 eine Batterieeinheit, bei der Zellen in Serie angeordnet sind und sich innerhalb eines zylindrischen Behälters befinden. Jede dieser Zellen stellt einen Hohlzylinder oder einen röhrenförmigen Körper dar. Die Zellen verfügen über Pole, die als Krempen ausgestaltet sind, damit entgegengesetzte Pole komplementär zusammengefügt werden können.

Mit den neuen erfindungsgemäß speziellen Batterietypen, wie sie in den Figuren gezeigt sind, liegen Energiespeicher vor, die als Teil des Aggregates einsetzbar sind und zudem durch Zusammenstecken in Reihe (Serienschaltung, S) geschaltet werden können oder durch eine Steckleiste bzw. Polleiste in einfacher Weise parallel (P) schaltbar sind.

Kurzbeschreibung der Figuren:

Fig. 1 zeigt eine erste Ausführungsform einer erfindungsgemäß eingesetzten Batteriezelle mit quadratischem Querschnitt.

Fig. 2 zeigt eine zweite Ausführungsform einer erfindungsgemäß eingesetzten Batteriezelle in Form einer Wickelzelle.

Fig. 3 zeigt eine bevorzugte Anordnung mehrerer erfindungsgemäßer Batteriezellen.

Fig. 4 zeigt eine weitere Variante der erfindungsgemäßen Flachzellen gemäß der ersten Ausführungsform.

Fig. 5 zeigt eine dritte Ausführungsform der erfindungsgemäß eingesetzten Batteriezelle mit Polüberlappungen.

Fig. 6 zeigt eine schematische Aufsicht einer speziellen Anordnung von erfindungsgemäßen Batterizellen-Bauelementen (Überlappungen oder Steckverbindungen nicht gezeigt).

Fig. 7a zeigt eine schematische Seitenansicht der U-Schienen c bzw. Doppel-U-Schienen d. Fig. 7b zeigt eine schematische Seitenansicht der integrierten Solarzellen-Batteriebauelemente mit den U-Schienen c bzw. Doppel-U-Schienen d.

Fig. 8a zeigt eine schematische Seitenansicht der erfindungsgemäßen speziellen Anordnung von Flachzellen mit Polüberlappung in Serienschaltung (S). Fig. 8b zeigt eine schematische Draufsicht der erfindungsgemäßen speziellen Anordnung von Flachzellen in Parallelschaltung (P) mit Polleisten PL(+) bzw. PL(-).

Erfindungsgemäß werden spezielle Anordnungen von Lithium-Polymer-Batterien gemäß der Ansprüche 1, 2 oder 3 bereitgestellt.

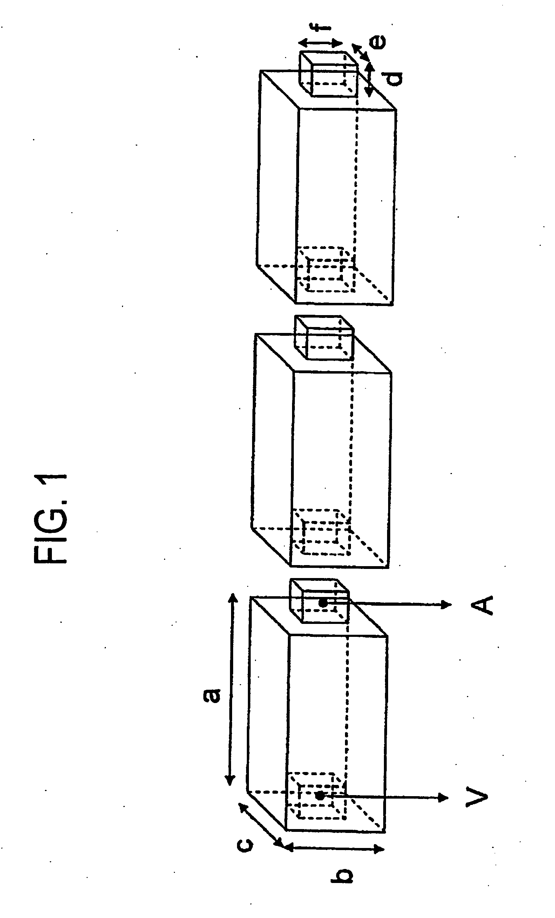

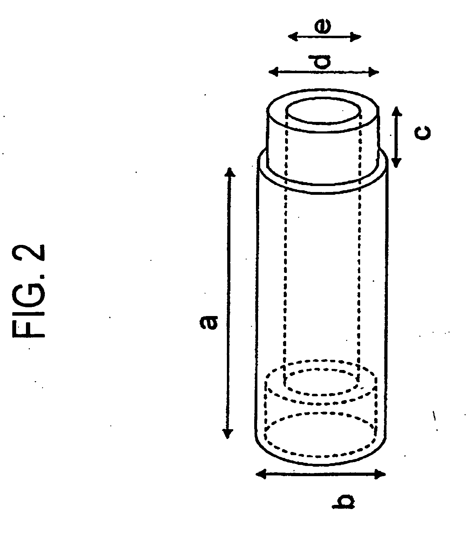

Lithium-Polymer-Batterien einer ersten und dritten Ausführungsform sind Flachzellen (entspr. der Figuren 1, 4 und 5) und bieten keine Probleme bei der Wärmeableitung. Dies gilt ebenso für die Wickelzellen einer zweiten erfindungsgemäßen Ausführungsform, die als Röhren ausgebildet sind (Fig. 2). Alle Zellentypen können nach Bedarf mittels eines Luftstromes gekühlt werden.

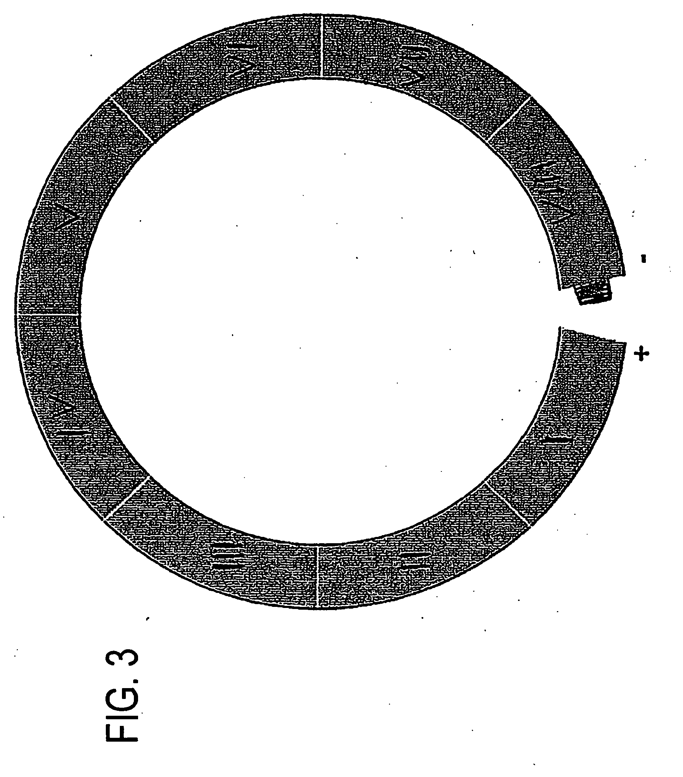

Wie aus den Figuren 2 und 3 ersichtlich ist, sind die erfindungsgemäßen Lithium-Polymer-Batterien einer ersten Ausführungsform so konstruiert, dass in die Vertiefung V (Einbuchtung) einer Batterie, in die der Plus-Pol integriert ist, die Ausbuchtung A einer anderen Batterie passgenau eingeführt werden kann und so die Batterien hintereinander in einer speziellen Anordnung geschaltet werden können. Die Ausbuchtung A enthält integriert den Minus-Pol der Batterie. Die Batterien entspr. Fig. 1 sind quadratisch geschaltete Flachzellen mit der Länge a von 3-20 cm, vorzugsweise von 5-10 cm, einer Dicke b von 0,6-5 cm, vorzugsweise von 1-3 cm und einer Breite. c von 0,5-20 cm, vorzugsweise von 1 bis 10 cm. Die Vertiefung V sowie die Ausbuchtung A sind zentriert an der Stirnseite entspr. Fig. 1 angeordnet. Die Dimension d, e, f für die Ausbuchtung A entsprechen denen der Vertiefung V und betragen d: vorzugsweise 0,5-2 cm, c: vorzugsweise 0,2-15 cm und vorzugsweise 0,3-2,5 cm.

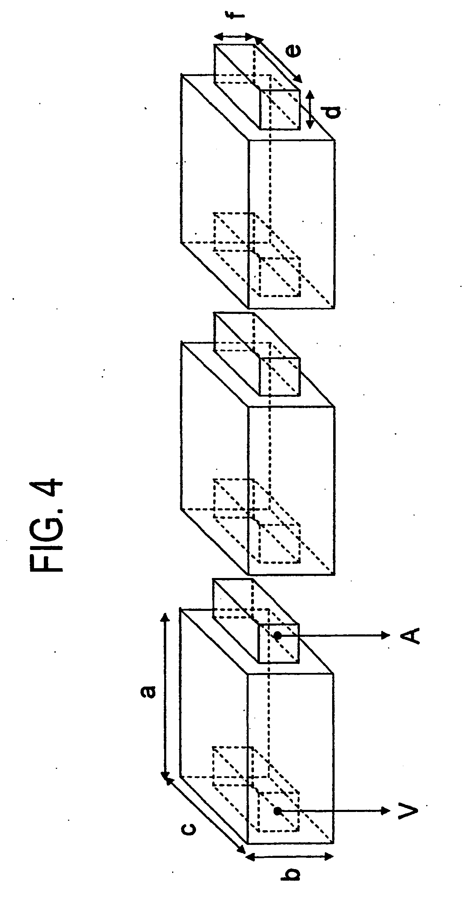

Die zB. für Solarzellenmodule angepassten Batterien gemäß der in der Fig. 4 gezeigten Alternative sind rechteckige Flachzellen mit Vertiefungen V bzw. aus Ausbuchtungen A an gegenüberliegenden Stirnseiten. Die Abmessungen sind insbesondere an die kommerziell erhältlichen Solarzellen-Bauelemente angepasst. Vorzugsweise haben die Zellen eine Länge a von 15-60 cm, besonders bevorzugt von 15-50 cm, eine dicke b von 0,5-5 cm, besonders bevorzugt von 1-3 cm, und eine Breite c von 10-35 cm, besonders bevorzugt von 14,4 bis 33 cm. Die Vertiefung V sowie die Ausbuchtung A sind entsprechend der Fig. 4 zentriert an der Stirnseite angeordnet und haben bevorzugt die Dimensionen d, e, f wie in der vorstehend beschriebenen Variante der ersten Aüsführungsform.

Der Pluspol ist in der Vertiefung V integriert und zwar vorzugsweise auf den Flachseiten der Vertiefung. Analog ist der Minuspol in der Ausbuchtung A, vorzugsweise auf den Flachseiten integriert. Die Herstellung der quadratischen bzw. rechteckigen Flachzellen erfolgt durch Kombination von Trilaminatlagen - polen der überstehenden Minus-Pol- bzw. Plus-Pol- Abschnitte, Zusammenfassen und Kontaktieren der jeweiligen Polabschnitte zu Minus und separatem Plus und Einhausen in vorzugsweise Verpackungs-Kunststoff-Materialien - die zusätlich mit Polypyrrol, Polyanilin oder ähnlichem beschichtet sind oder dieses Material in Mengen bis zu 15 Gew. -%, bezogen auf die Gesamtmenge der Verpackungs-Kunststoff-Materialien enthalten.

Die Lithium-Polymer-Batterien der zweiten Ausführungsform sind als Wickelzellen-Röhre ausgebildet (siehe Fig. 2). Sie sind ebenfalls so konstruiert, dass sie zusammensteckbar sind, d.h. der verjüngte Steckteil der Röhre ist passgenau in die Röhre mit dem Durchmesser b steckbar. Die Länge der Röhre a beträgt 3-40 cm, vorzugsweise 5-20 cm, die Länge des verjüngten Steckteils c beträgt 0,5-5 cm, vorzugsweise 0,5-2 cm.

Der Durchmesser der Röhre b betragt 2,5-15 cm, der Durchmesser des Steckteils 1,5-10 cm Der Innendurchmesser der Röhre d entspricht dem äußeren Durchmesser des (verjüngten) Steckteils d: 1,5-10 cm und der innere Durchmesser des (verjüngten) Steckteils e beträgt 1-7,5 cm. Die Wandstärke der Lithium-Polymer-Batterie-Röhre entspricht b minus d: d.h.1,0 bis 5 cm und für den verjüngten Steckteil d minus e: d.h. 0,5 bis 2,5 cm. Der Minus-Pol ist in der Außenseite des verjüngten Steckteils integriert, der Plus-Pol am anderen Ende der Lithium-Polymer-Batterie-RÖhre auf der Innenseite.

Die Herstellung der erfindungsgemäßen Lithium-Polymer-Batterie-Röhre entspr. Fig. 2 erfolgt durch Wickeln von Trilaminaten um einen Dom, der dadurch den Innendurchmesser der Röhre bestimmt. Der Dorn z. B. ausgebildet als Röhre kann als "verlorene Schalung" in die erfindungsgemäße Batterie-Röhre integriert sein oder aber nach erfolgten Wickeln entfernt und ein anderes Einbauungsmaterial für die Gestaltung der Innenseite der Batterie-Röhre eingesetzt werden. Nach dem Wickeln erfolgt das Polen des Minus- wie auch des Plus-Pols durch Zusammenfassen und Kontaktieren der jeweiligen Polabschnitte.

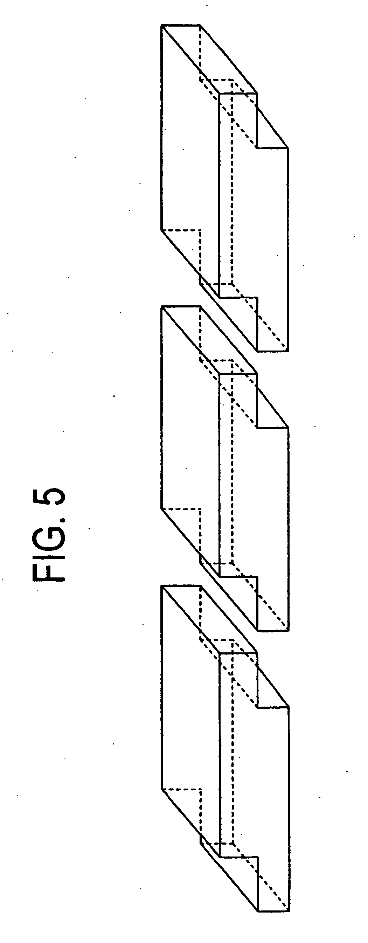

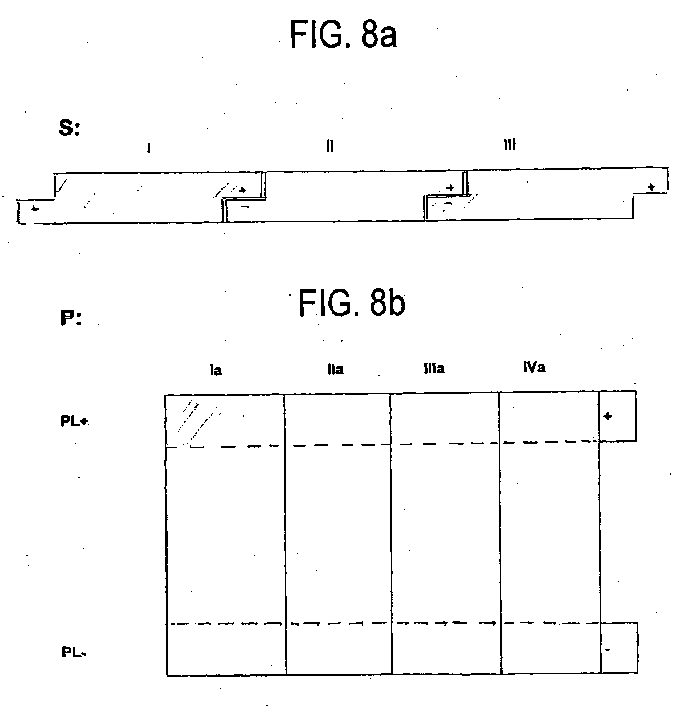

In einer dritten Ausführungsform können die Pole einer Flachzelle entspr. Fig. 5 durch an den Stirnseiten der Batterien ausgebildete Rücksprünge an den Polen mit einer weiteren solchen Zelle überlappen. Die Pole sind dabei jeweils an den Unterseiten der Rücksprünge angeordnet, so dass bei der Überlappung zweier Batterie-Bauelementen, Plus-Pol und Minus-Pol miteinander zur Deckung gebracht werden können, wie in Fig. 8a gezeigt ist. Bei der Parallelschaltung werden die an den jeweiligen Unterseiten der Vorsprünge liegenden Pole mit den Polleisten zur Deckung gebracht.

In dieser Ausftihrungsform sind die Batterie-Bauelemente nicht als Stecksysteme gefertigt, sondern mit Pol-Überlappung konstruiert, wobei die Pol-Überlappungen 1-5 cm betragen.

In einer besonderen Ausführungsform können Solarzellen integriert werden. Bei den erfindungsgemäßen Bauelementen entspr. Fig. 4 bedeckt z. B. die Solarzelle die Oberfläche des Batterieelementes - vorzugsweise einseitig. Bei den erfindungsgemäßen Bauelementen entspr. Fig. 5 bedeckt die Solarzelle ebenfalls die Oberfläche des Batterieelementes - ebenfalls vorzugsweise einseitig - nur bei der Ausführungsform gemäß Fig. 5 ist die Solarzelle um den Überlappungsteil größer als bei dem Stecksystem der Fig. 4. Für diese besondere Anwendung der erfindungsgemäßen Batterie-Bauteile und bei diesen speziellen Anordnungen dieser Bauteile können die Batteriezellen derart angepasst sein, dass die Länge a und Breite c den kommerziell erhältlichen Solarzellen (siehe z.B. Conrad Hauptkatalog 2005/2006 S. 639-644, z. B. Solarmodule 434 x 234 x 20 mm, 293 x 144 x 21 mm, 293 x 330 x 21 mm) entspricht.

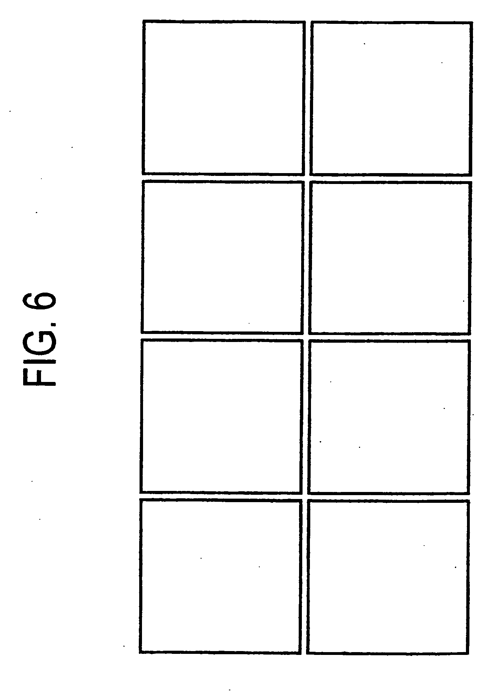

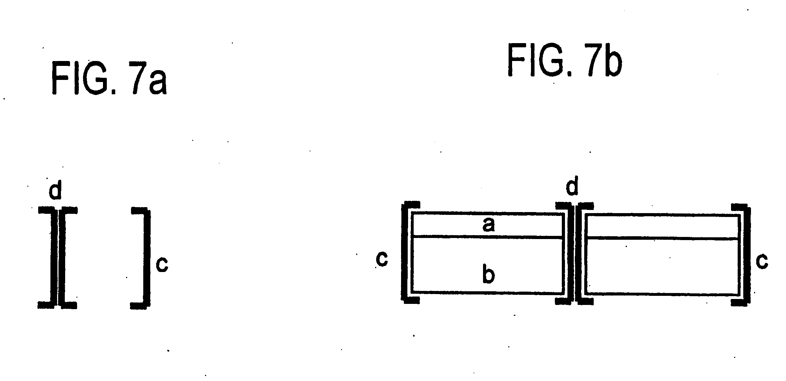

Die verwendeten Solarzellen haben eine Dicke von 5 bis 50 mm, vorzugsweise von 10 bis 30 mm. Über U-Schienen sind die Solarzellen in Längsrichtung beidseitig mit der Li-Polymerbatterie befestigt. Der Laderegler ist in dem Gesamtverbund jeweils integriert. Zur Herstellung großflächiger, zweidimensionaler Einheiten werden hintereinander geschaltete erfindungsgemäße Bauelemente über Doppel-U-Schienen parallel mit anderen hintereinander geschalteten Bauelementen gekoppelt (Fig. 6 Aufsicht und Fig. 7b Vordersicht). In Fig. 7b bedeutet a Solarzelle, b die Li-Polymer-Batterie, c die einfache U-Schiene und d die Doppel-U-Schiene.

In der erfindungsgemäße Batterieanordnung mit in Parallel- oder Serienschaltung geschalteten Batterien, die z.B. für ein Solarzellenmodul verwendet wird, ist bevorzugt ein Sinus-Wechselrichter umfasst, um die in der Batterie erzielte Spannung auf Wechselspannung umzustellen.

In Fig. 8 ist zur Veranschaulichung der speziellen Anordnungen der Batterie-Bauelemente gemäß der vorliegenden Erfindung eine Serienschaltung (S) bzw. Parallelschaltung (P) mit den Polleisten PL (+) sowie der Polleiste PL (-) von Batterie-Bauelementen gemäß der dritten Ausführungsform, ohne Solarzellen oder weiteren integrierten Bauelementen, dargestellt.

Die zum Bau der Flachzellen wie auch der Wickelzellen verwendeten Trilaminate sind Folienlagen aus Anode und Kathode mit einer Separatorzwischenlage.

Die Elektroden, Anode sowie Kathode bestehen aus dem Elektrodenableiter z.B. Cu-Folie für die Anode und z.B. geprimerte Al-Folie für die Kathode. Zudem können aus Gründen der Verarbeitbarkeit vorteilhafter Weise Folien, Netze, Vliese oder Gewebe für den Elektrodenableiter verwendet werden.

Die Hauptkomponente der Aktiven Anoden Massen (AAM) ist bevorzugt Liinterkalierbarer Kohlenstoff. Hier sind vor allem natürlicher oder synthetischer Graphit geeignet, ferner Ruß sowie aktivierter Kohlenstoff, CMS Carbon Molecular Sieves, Carbon Gel, Carbon Nanotubes sowie ACF Activated Carbon Fibres u. ä.. Eine Auflistung verschiedener, für die Erfindung brauchbarer poröser Feststoffe ist im "Handbook of porous Solids", Vol. 3, S. 1766-1963, Verlag Wiley-VCH, Weinheim 2002, zu finden (Lit. 1). Zur Anwendung gelangen z. B. MCMB® 6-28, 10-28, 25-28, ferner Kropfmühlgraphit z. B. SGB®15, 20, 25 sowie Timcal Graphit, z.B. LVH, KS6, SLP 30 u. ä. wie MSC-7A® (Takeda Comp., Japan) oder auch Nano-dimensionierte Liinterkalierbare Kohlenstoffe. Die Materialien führen in Kombination mit dem vorstehenden zu einer besseren Effizienz der Batterie, insbesondere wenn diese Kohlenstoffe bevorzugt in Mengen von 40-80 Gew.%, mehr bevorzugt von 50-70 Gew.% verwendet werden, bezogen auf die Gesamtmenge der AAM.

Weitere Bestandteile der AAM können hochsiedende Lösungsmittel sein. Geeignet sind beispielsweise Ethylen-, Propylen-, Alkylcarbonate o. ä., ferner Perfluorether o. ä., die für sich oder im Gemisch bevorzugt in Mengen von 1-50 Gew.%, mehr bevorzugt von 5-25 Gew.-% zur Anwendung gelangen.

Weitere Zusätze wie beispielsweise MgO, $Al_2O_3$, Zeolithe, Glimmer, Zement oder andere Silikate, insbesondere Li-Silikate und Borate, insbesondere Li-Borate, können Komponenten der AAM sein und erhöhen, wenn sie in der vorstehend beschriebenen Gesamtstruktur der Batterie vorliegen, ebenfalls die Zyklenbeständigkeit. Sie liegen bevorzugt in Mengen von 5-35 Gew.%, mehr bevorzugt von 7,5-20 Gew.% vor.

Eine der möglichen Variationen ist die zusätzliche Verwendung von Leitsalzen. Die Leitsalze werden beispielsweise mikroverkapselt in Mengen von mit Blick auf die erwähnte Effizient bevorzugt 5-25 Gew.%, mehr bevorzugt 7,5-15 Gew.-% verwendet, Li-Organoborate, z.B. Li-Oxalatoborat, können auch ohne Mikroverkapselung verwendet werden. Die verwendeten Kohlenstoffe werden im Vakuum, bevorzugt bei 267-1130 Pa und 100-150°C, entgast, ebenso die Zusätze. Die Elektrolyte werden entweder mikroverkapselt zugesetzt oder erst vor dem Einhausen eindosiert. Der interkalierbare Kohlenstoff wird nach dem Entgasen in einem Mahlwerk mit der erfindungsgemäßen Polydispersion angepastet und solange gerührt, bis eine homogene, einphasige Masse entstanden ist. Diese Masse wird dann mit den erfindungsgemäßen Gerüstsubstanzen, z.B. mit MgO, Boraten" Zement o. ä., in den erfindungsgemäßen Mengen versetzt und auf die Elektrodenableiter, z. B. Cu-Folie, aufgebracht. Die AKM (z. B. Li-Metalloxide) werden analog angepastet und auf den Elektrodenableiter aufgetragen.

Eine Komponente der Aktiven Kathoden Massen (AKM) können bevorzugt Liinterkalierbare Metalloxide z. B. auf Basis von Co, Ni, Fe, Cr, Mo, W, Mn, Fe-Phosphat oder Fe-Borat sein, die für sich oder im Gemisch eingesetzt werden können. Bevorzugt sind Co-, Ni- und Mn-Oxide bzw. deren Gemische. Die Menge der interkalierbaren Metalloxide beträgt bevorzugt 40-90 Gew.%, weiter bevorzugt 40-80 Gew.%, ferner bevorzugt 50-70 Gew.%, bezogen auf die Gesamtmenge der Aktiven Kathoden Massen. Sie können entsprechend dem vorstehend beschriebenen Verfahren entgast sein. Bevorzugt eingesetzt werden z. B. Oxide mit einem Durchmesser von 1-30 $\mu$m, mehr bevorzugt solche mit einem Durchmesser von 5-15 $\mu$m, aber auch Nano-dimensionierte Materialien sind geeignet. In Abhängigkeit von der Art, der Menge und dem Durchmesser dieser Oxide kann die Zyklenstabilität der Batterie in Kombination mit deren anderer Bestandteile weiter gesteigert werden.

Als Polymerbinder für die Anodenmasse wie auch für die Kathodenmasse werden die im nächsten Abschnitt beschriebenen Fluorpolymere in Mengen von 3 bis 15 Gew.-%, bevorzugt 3 bis 10 Gew.% und weiter bevorzugt 5-8 Gew.% ,bezogen auf die jeweilige Menge der Elektrodenmasse AAM oder AKM, eingesetzt.

Zusätze in den AKM können anorganische Gerüstsubstanzen wie Borate, MgO, $SiO_2$ Zeolithe o. ä. sein, wie sie vorstehend für die AAM erwähnt werden.

Der Separator wird erfindungsgemäß durch Extrusion hergestellt, bevorzugte Dicken sind von 10-50 $\mu$m. In Frage kommen poröse Polymer-Gel-Elektrolytfolien.

Der erfindungsgemäß hergestellte Separator enthält anorganische Geräststrukturen wie MgO, $Al_2O_3$, $SiO_2$, Silikate, Glimmer, Borate, Zement, Zeolithe oder andere Polysilicate, sowie organische Polymere wie Poly(meth)acrylate mit C > 3 im Alkylrest, Fluorelastomere, vorzugsweise Terpolymere z. B. Dyneon THV 220® oder ä., ferner Blockcopolymerisate (z.B. Styroflex®), Kautschuk u. ä. in bevorzugte Verhältnis die anorganischen Gerüstsubstanzen (in Gew.-%) 10-30 % des Separators betragen (vgl. nachstehend aufgeführte bevorzugte Beispiele).

*Herstellung der erfindungsgemäßen Separatorfolie*

Als weitere Bestandteile können beispielsweise aprotische Lösungsmittel wie Alkylcarbonate oder ä. allein oder im Gemisch enthalten sein. Die bevorzugte Menge der aprotischen Lösungsmittel beträgt 20-60 Gew.%, mehr bevorzugt 35-50 Gew.%. Zudem können die aprotischen Lösungsmittel optional gelöste Leitsalze wie Li-Oxalatoborate, Li-Organoborate oder ä. allein oder im Gemisch enthalten sein. Die Leitsalze können beispielsweise mikroverkapselt in bevorzugten Mengen von 5-25 Gew.%, mehr bevorzugt 7,5-15 Gew.% verwendet werden. Auf diese Weise werden Nebenreaktionen durch Feuchtigkeitseinwirkungen beim Verarbeitungsprozess weitgehend ausgeschlossen.

Für die Herstellung des Polymer-Gel-Elektrolyt-Separators werden bevorzugt Fluorpolymere verwendet:

Geeignet sind Fluorpolymere, entsprechend der Literatur Ullmann's Encyclopedia of Industrial Chemistry, Vol. A 11, S. 394-429, 1997, Verlag VCH, Weinheim, die wässrig dispergiert vorliegen können. Die eingesetzten Monomeren der Fluorpolymere können Tetrafluorethylen (TFE), Hexafluorpropylen (HFP), Vinylidenfluorid (VDF) und/oder Perfluorvinylether sein. Es sind bevorzugt Terpolymere aus einem oder mehreren dieser oder auch anderer Fluorpolymere einzusetzen. Unter anderen kann es sich ebenfalls um Fluorelastomere, und insbesondere um Elastomere auf Basis der vorstehenden Polymeren handeln.

In bevorzugten Ausführungsformen für den Separator einsetzbare Fluorpolymere sind zum Beispiel Terpolymere aus TFE/HFP/VDF (THV), Copolymere aus TFE/HFP (NHP) oder Perfluoroxicopolymere aus beispielsweise TFE und Perfluorvinylether (PFA). Als kommerziell erhältliche Produkte können zum Beispiel die in der Tabelle 1 genannten Fluorpolymere eingesetzt werden (Dyneon Firmenschrift (USA) 98-0504-1025 (CPI)). In der Tabelle 1 sind diese bezüglich ihrer Eigenschaften charakterisiert.

Die im vorliegenden Abschnitt beschriebenen Massen für Anode, Kathode und Separator werden im Extruder (Collin) bei 80-120°C, vorzugsweise 80-100°C, extrudiert und als Folien im Fall von Anodenmasse und Kathodenmasse auf die jeweiligen spezifischen Ableiter aufgetragen und mit der Separatorfolie als Zwischenlage zu den erfindungsgemäßen quadratischen bzw. rechteckigen Flachzellen oder den Röhrenzellen weiterverarbeitet.

Eine weitere Ausgestaltung dieser Erfindung besteht darin, die Batterie-Bauteile entspr. Fig. 1 oder Fig. 2 auch gekrümmt zu gestalten, so dass beim Zusammenstecken Viertel-, Halb- oder Vollkreise (Fig. 3) entstehen. Der Außendurchmesser dieser Typen beträgt 50 cm bis 500 cm. Die Herstellung erfolgt durch Einhausen in die vorgefertigten Batterie-Gehäuse, die dann durch Zusammenstecken den Typen entspr. Fig. 3 erreichen. Die Zahl der Einzelsteckbatterien beträgt bis zu 2000, jedoch können auch, je nach Anforderung größere Durchmesser oder Einzelsbeckbatterien realisiert werden.

Die durch Extrusion hergestellten Folien können z.B. Schichtdicken von 10-50 $\mu$m, und bevorzugt 15-40 $\mu$m haben Die Schichtdicke des Cu-Ableiters beträgt 12 $\mu$m und die Schichtdicke des geprimerten Al-Ableiters 15 $\mu$m. Als Primer wird eine Mischung aus Ruß (30 Gew.-%) und Fluorelastomeren Dyneon THV 220 D eingesetzt. Die Gew.-% vom Ruß beziehen sich auf die Gesamtmenge des Primer-Feststoff-Gemisches. Bei der Herstellung der erfindungsgemäßen Batterien entspr. Fig. 1, 2, 4 und 5 werden die Elektroden ausgeklinkt, kontaktiert, eingehaust und gegebenenfalls evakuiert und mit Elektrolyt befüllt; anschließend wird formiert.

Anschließend wird die Erfindung durch Beispiele beschrieben, wobei diese lediglich zur Erläuterung der Erfindung dienen.

Beispiele

Vergleichsbeispiel 1

*Flachzelle* (Typ Fig. 1)

Länge 15 cm
Breite 5 cm
Dicke 3 cm
Volumen 225 ccm
Ausbuchtung 4 x 1 x 1 cm
Vertiefung: anlog

Elektrische Eigenschaften*: Spez. Leistung: Wh/kg 2300 ⎤ 10 sec Impulsentladung
Leistungsdichte: Wh/kg 7000 ⎦

| Kapazität: | 6 Ah |
| --- | --- |
| Obere Abschaltspannung: | 4,2 V |
| Untere Abschaltspannung: | 3,0 V |
| Maximalstrom: | 6 A (entspricht 1 C Rate) |
| Cyclentest: | Be- und Entladung wird mit einer 1 C Rate so lange durchgeführt, bis die Endkapazität 80 % erreicht. Die Zahl der Cyclen bis zum Erreichen von 80 % sind die "erreichten Cyclen". |
| Pulstest: | 30-Sekunden-Takt mit 20 C Belastung |

* Die Untersuchung und Bewertung der Batterieeigenschaften erfolgt mit einem Batterietestgerät der Firma Digatron (Aachen).

Die Formation der Batterien erfolgt mit einem konstanten Strom von 0,60 A bis zum einem Potential von 4,2 V und anschließend bei konstantem Potential von 4,2 V, bis der Strom auf < 0,12 A gefallen ist (CCCV- constant current constant voltage). Die Entladung findet mit 0,60 A bis zur unteren Spannungsgrenze von 3,0 V statt. Im Anschluss werden Qualitätssicherung und Kapazitätsbestimmung zwei weitere Zyklen durchgeführt. Die Ladung geschieht mit 1,8 A bis 4,2 V und bei konstantem Potential bis der Strom unter 0,18 A gefallen ist. Die Entladung erfolgt mit 1,8 A bis zur Schlussspannung von 3,0 V.

Zyklendaten

Um die Zyklenstabilität der oben genannten formierten Batterie zu messen, wird diese mit 3 A bis 4,2 V geladen, dann wird in einer Konstantpotenzialphase bei 4,2 V nachgeladen, bis der Strom auf unter 0,3 A gefallen ist. Die Entladung erfolgt mit 4,8 A. Die untere Abschaltspannung beträgt 3,0 V. Die Figur 1 zeigt eine Auftragung der spezifischen Kapazität gegen die Zyklenzahl. Die Batterie zeichnet sich durch eine hohe Zyklenbeständigkeit aus, d.h. die spezifische Kapazität nimmt selbst über große Zyklenzahlen hin nicht übermäßig ab.

Belastungstest bei Raumtemperatur

Die Ladung der oben genannten formierten Batterie erfolgt mit 6 A bis 4,2 V, in einer Konstantpotenzialphase wird bei 4,2 V nachgeladen, bis der Strom auf unter 0,6 A gefallen ist. Die Entladung erfolgt bei unterschiedlichen Strömen zwischen 6 (1C) und 126 A (21C). Die untere Abschaltspannung beträgt 2,7 V.

Bei unterschiedlichen C-Raten von 2 bis 10 zeigt sich über einen breiten Bereich der Entladekapazität Ah von 1-6 nur ein geringes Absinken des Spannungswerts von 4,2 bis auf 3 Volt.

Durch Zusammenstecken von 10 Batterien hintereinander nach dem Druckknopfprinzip, Ausbuchtung in Vertiefung u.s.w., wurde ein System mit einer Gesamtspannung von 42 V erhalten. Die Gesamtanordnung hatte eine Länge von 150 cm und dient als starre Mittelstrebe in einem Geräteteil. Wichtig ist, dass hier durch einen Sinus-Wechselrichter die Gleichspannung in Wechselspannung überführt wird. Durch Serienschaltung von 100 Batterien werden Kapazitäten von 600 Ah erreicht, auch hier erfolgt mittels eines Sinus-Wechselrichters die Entnahme als Wechselspannung. Bei diesen erfindungsgemäßen Flachsystemen wird beim Be- und Entladen keine Überhitzung des Batteriesystems beobachtet.

Beispiel 2

_Röhrenzelle_ (Typ Fig. 2)

| Eine Länge | 15 cm (a) |
| --- | --- |
| Durchmesser außen | 6 cm (b) |
| Durchmesser innen | 1,2 cm (e) |
| Äußerer Durchmesser der Ausbuchtung | 2,8 cm (d) |
| Länge der Ausbuchtung | 3,0 cm (c) |

Durch Wickeln der Trilaminate um einen Dorn (Röhre) wird ein Röhrenwickel erhalten, bei dem der Plus-Pol in der Ausbuchtung gepolt ist und der Minuspol sich in der Innenseite der Einbuchtung - in die passgenau die Ausbuchtung einsteckbar ist. Nach dem bereits erwähnten Steckprinzip sind die Röhren hintereinander schaltbar. Bei Parallelschaltungen können die Einzelröhren gebündelt werden.

Beispiel 3

| Überlappunpszelle mit integrierter Solarzelle (Typ Fig. 5) | |
| --- | --- |
| Länge | 15 cm(a) |
| Breite | 9 cm (c) |
| Dicke | 3 cm (b) (ohne integrierte Solarzelle) |
| Überlappung | 2 cm Länge, 1,5 Dicke, Breite 9 cm |

Die integrierte Solarzelle ist: 17 cm lang (a + Überlappungsteil) 9 cm breit und 2,5 cm dick.

Die Befestigung der Solarzelle auf einer Oberseite der Flachzelle erfolgt durch U-Schienen, die jeweils längsseitig angebracht sind.

Herstellung: Die Trilaminate werden entspr. der Zellengröße geschichtet. Die Kupferelektrode wird als Anode gepolt und wird eine Überlappungsfläche mit dem Plus-Pol als einer Kontaktfläche P+; analog wird die Aluminiumelektrode als Kathode gepolt ebenfalls mit einer Überlappungsfläche und dem Minus-Pol als Kontaktfläche P-(vgl. Fig. 5). Nach dem Einhausen und Evakuieren wird die Zelle formiert und mit einer Solarzelle und einem Laderegler kontaktiert.

Beispiel 4

Serienschaltung S (Fig. 8a)

Drei Überlappungszellen I, II, III sind in Serie geschaltet und über 2 U-Schienen fixiert. Die Gesamtspannung beträgt 12,5 V. Bei Serienschaltung von 10 Zellen wird eine Gesamtspannung von 41 Volt erreicht. Mittels elektronischer Diodenschaltung wird der Gleichstrom der Batteriezellen in Wechselspannung transformiert z. B. mit einem Sinus-Wechselrichter 150 W-12 (Lieferfirma Conrad).

Beispiel 5

Parallelschaltung P (Fig. 8b)

Die nebeneinander liegenden Zellen Ia, IIa, IIIa, IVa, werden mittels der Polleisten PL (+) und PL (-) kontaktiert und fixiert. Durch das Parallelschalten wird eine Kapazitätsleistung von ca. 23 Ah erreicht, analog werden durch Parallelschalten von 10 Zellen Kapazitäten von ca. 60 Ah erzielt.

Die Anmeldung beschreibt und beansprucht spezielle Lithium-Polymer-Batterien und Verfahren zur Herstellung derselben. Erfindungsgemäßes Merkmal dieser neuen Batterien ist die Möglichkeit die Batterien durch Zusammenstekken in Reihe zu schalten, bzw. durch Steckleisten parallel zu schalten. Die Batterien zeichnen sich aus durch Ausbuchtungen und geometrisch äquivalente Vertiefungen (Einbuchtungen), die die Herstellung großflächiger Einheiten erlauben. Die Batterien sind Flachzellen oder Wickel-Röhren.

Sie können starr (geradlinig) gestaltet sein, aber auch gekrümmt mit großer Variation des Krümmungsradius, so dass diese speziellen Batterie-Systeme Halbkreise, Vollkreise oder ä. bilden können. Die Stromableitung mit Minus-Pol und Plus-Pol erfolgt wie erwähnt über Steckleisten entspr. der Druck-Knopf-Technik.

Anode, Kathode und Separator werden durch separate Extrusion der jeweiligen Massen durchgeführt, wobei die Anodenmasse aus vorzugsweise 85-93 % synthetischen oder natürlichem Kohlenstoff und 5-7 % einem Terpolymer eines Fluorelastomeren und 2-8 % Li-Leitsalz besteht und direkt auf eine ungeprimerte Cu-Folie abgeschieden wird und die Kathodenmasse aus vorzugsweise LiCoNiOxiden (84-92 %), 5-7 % einem Terpolymer eines Fluorelastomeren und 1-5 % Li-Leitsalz und 2-4 % Pyrrol und/oder Leitfähigkeitsruß besteht und auf geprimerte A1-Folie abgeschieden wird. Die Separatormasse besteht vorzugsweise aus 30 % MgO, 30 % Li-Leitsalz, 20 % Fluorelastomer und 30 % aprotischem Lösungsmittel. Die Separatormasse wird ebenfalls extrudiert und dient als Zwischenlage von Anode und Kathode. Die erfindungsgemäßen Batterien erfüllen auch als Hochenergie-Batterien die Sicherheitsstandards, wie Nail-Penetrations-Test u. ä. und erlauben darüber hinaus den Einbau als stabilisierende Geräteteile.

**Patentansprüche**

1. Spezielle Anordnung von Lithium-Polymer-Batterien, wobei mehrere Lithium-Polymer-Batterien durch Steckverbindungen über eine Vertiefung V und eine Ausbuchtung A Minus-Pol mit Plus-Pol hintereinander angeordnet sind, wobei die auf gegenüberliegenden Seiten der Batterie angeordneten entgegengesetzten Pole jeweils in der Ausbuchtung A bzw. Vertiefung V integriert sind, **dadurch gekennzeichnet, dass** die Lithium-Polymer-Batterie als Wickelzellen-Röhre ausgebildet ist, die an einem Ende (c, d, e) verjüngt ist, und in wenigstens eine weitere analoge Lithium-Polymer-Batterie-Röhre gesteckt ist, wobei die Länge der Röhre a 5-20 cm und die Länge des verjüngten Steckteils c 0,5-2 cm beträgt, und wobei optional der Durchmesser der Röhre b 2,5-15 cm und der Durchmesser des Steckteils d 1,5-10 cm beträgt, wobei optional der Innendurchmesser der Röhre dem äußeren Durchmesser des Steckteils entspricht, d.h. d = 1,5-10 cm, und wobei optional der innere Durchmesser des Steckteils e 1-7,5 cm beträgt, so dass die Wandstärke der Lithium-Polymer-Batterie-Röhre b minus d = 1,0 bis 5 cm und für das Steckteil d minus e = 0,5 bis 2,5 cm entspricht.

2. Spezielle Anordnung von Lithium-Polymer-Batterien, wobei mehrere Lithium-Polymer-Batterien mit Polüberlappungen auf beiden Stirnseiten der Batterien hintereinander angeordnet sind, wobei die in den Überlappungsbereichen integrierten Minus-Pole und die in den Überlappungsbereichen integrierten Plus-Pole miteinander in Serienschaltung verbunden sind, **dadurch gekennzeichnet, dass** die Lithium-Polymer-Batterie als Wickelzellen-Röhre ausgebildet ist, die an einem Ende (c, d, e) verjüngt ist, und in wenigstens eine weitere analoge Lithium-Polymer-Batterie-Röhre gesteckt ist, wobei die Länge der Röhre a 5-20 cm und die Länge des verjüngten Steckteils c 0,5-2 cm beträgt, und wobei optional der Durchmesser der Röhre b 2,5-15 cm und der Durchmesser des Steckteils d 1,5-10 cm beträgt, wobei optional der Innendurchmesser der Röhre dem äußeren Durchmesser des Steckteils entspricht, d.h. d = 1,5-10 cm, und wobei optional der innere Durchmesser des Steckteils e 1-7,5 cm beträgt, so dass die Wandstärke der Lithium-Polymer-Batterie-Röhre b minus d = 1,0 bis 5 cm und für das Steckteil d minus e = 0,5 bis 2,5 cm entspricht.

3. Spezielle Anordnung von Lithium-Polymer-Batterien, wobei mehrere Lithium-Polymer-Batterien nebeneinander angeordnet sind und durch Steckleisten separat die in den Überlappungsbereichen integrierten Minus-Pole und separat die in den Überlappungsbereichen integrierten Plus-Pole miteinander in Parallelschaltung verbunden sind, **dadurch gekennzeichnet, dass** die Lithium-Polymer-Batterie als Wickelzellen-Röhre ausgebildet ist, die an einem Ende (c, d, e) verjüngt ist, und in wenigstens eine weitere analoge Lithium-Polymer-Batterie-Röhre gesteckt ist, wobei die Länge der Röhre a 5-20 cm und die Länge des verjüngten Steckteils c 0,5-2 cm beträgt, und wobei optional der Durchmesser der Röhre b 2,5-15 cm und der Durchmesser des Steckteils d 1,5-10 cm beträgt, wobei optional der Innendurchmesser der Röhre dem äußeren Durchmesser des Steckteils entspricht, d.h. d = 1,5-10 cm, und wobei optional der innere Durchmesser des Steckteils e 1-7,5 cm beträgt, so dass die Wandstärke der Lithium-Polymer-Batterie-Röhre b minus d = 1,0 bis 5 cm und für das Steckteil d minus e = 0,5 bis 2,5 cm entspricht.

4. Spezielle Anordnung von Lithium-Polymer-Batterien entsprechend Anspruch 1, **dadurch gekennzeichnet, dass** die Lithium-Polymer-Batterie mit einer Vertiefung V, in die der Plus-Pol integriert ist, und mit einer Ausbuchtung A, in die der Minus-Pol integriert ist, konstruiert ist.

5. Spezielle Anordnung von Lithium-Polymer-Batterien entsprechend einem der Ansprüche 1, 3 und 4, **dadurch gekennzeichnet, dass** die Lithium-Polymer-Batterie rechteckig bzw. quadratisch als Flachzelle geformt ist und eine Länge a von 3-20 cm, vorzugsweise von 5-10 cm, und eine Breite c von 0,5-20 cm, vorzugsweise von 1 bis 10 cm, hat, wobei optional die Vertiefung V sowie die Ausbuchtung A zentriert an gegenüberliegenden Stirnseiten angeordnet sind und optional die Dimensionen d, e, f für die Ausbuchtung A denen der Vertiefung V entsprechen und die folgenden Werte betragen: d: 0,5-2 cm, e: 0,2-15 cm und f: 0,3-2,5 cm.

6. Spezielle Anordnung von Lithium-Polymer-Batterien entsprechend einem der Ansprüche 1, 3 und 4, **dadurch gekennzeichnet, dass** die Batterie rechteckig bzw. quadratisch als Flachzelle geformt ist und eine Länge a von 10-54 cm, vorzugsweise von 10-30 cm, und eine Breite c von 5-30 cm hat, wobei optional die Vertiefung V sowie die Ausbuchtung A zentriert an gegenüberliegenden Stirnseiten angeordnet sind und die Dimension d, e, f für die Ausbuchtung A denen der Vertiefung V entsprechen.

7. Spezielle Anordnung von Lithium-Polymer-Batterien entsprechend einem der Ansprüche 1 bis 3, **dadurch gekennzeichnet, dass** die Batterie mit Polüberlappungen ausgestaltet ist, wobei die Polüberlappungen 1 bis 5 cm betragen.

8. Spezielle Anordnung von Lithium-Polymer-Batterien entsprechend einem der Ansprüche 1, 2, 3, 4 und 5, **dadurch gekennzeichnet, dass** die zusammensteckbaren Lithium-Polymer-Batterien gekrümmt sind und optional nach dem Zusammenstecken einen geformten Kreis bilden, wobei der Durchmesser 50 cm bis 5 m beträgt und optional die Zahl der Einzel-Batterien 10-2000 beträgt.

9. Spezielle Anordnung von Lithium-Polymer-Batterien entsprechend einem der Ansprüche 1 bis 8, **dadurch gekennzeichnet, dass** die Lithium-Polymer-Batterien aus Kathodenmasse, Polymergel-Separator und Anodenmasse aufgebaut sind und durch Extrusionsbeschichtung der Kathodenmasse auf geprimertem Al-Ableiter und Extrusionsbeschichtung der Anodenmasse auf Cu-Ableiter mit anschließendem Einbringen des Separators und Laminieren hergestellt werden.

10. Spezielle Anordnung von Lithium-Polymer-Batterien entsprechend Anspruch 9, **dadurch gekennzeichnet, dass** als Kathodenmasse Gemische aus 87-91 % Oxiden und Phosphaten von Ti, V, Cr, Mn, Fe, Co, Ni mit 1-3 % Lithium-Leitsalzen vorzugsweise Li-Organoboraten, 3-5 % MgO und 3-5 % Polymerbindern wie modifizierten Styrol-Blockpolymerisaten oder Fluorelastomeren, vorzugsweise Terpolymeren, und 1-2 % aprotische Lösungsmittel eingesetzt werden, wobei die %-Angaben Massenprozente bezogen auf die jeweilige Gesamtmasse sind.

11. Spezielle Anordnung von Lithium-Polymer-Batterien entsprechend Anspruch 9, **dadurch gekennzeichnet, dass** als Anodenmasse Gemische aus 90-94 % synthetischen oder natürlichen Kohlenstoffen oder $TiO_2$ mit 1-3 % Lithium-Leitsalzen und 3-5 % Polymerbinder und 1-2 % aprotischen Lösungsmitteln eingesetzt werden.

12. Spezielle Anordnung von Lithium-Polymer-Batterien entsprechend Anspruch 9, **dadurch gekennzeichnet, dass** als Separatormassen Gemische aus 20-40 % MgO mit 10-15 % Lithium-Leitsalzen und 15-25% Polymerbindern sowie 10-30 % aprotischen Lösungsmitteln eingesetzt werden.

13. Spezielle Anordnung von Lithium-Polymer-Batterien entsprechend einem der Ansprüche 9 bis 12, **dadurch gekennzeichnet, dass** die Kathoden-, Anoden- und Separatormassen unter trockenem Reinst-$N_2$ separat in einem Mischer bei 20-60 °C 30 bis 300 Minuten gemischt werden und dann separat in einem Extruder bei 80-120 °C extrudiert werden, wobei sie optional eine Stärke von 10-50 $\mu$m, vorzugsweise 15-40 $\mu$m, aufweisen.

14. Spezielle Anordnung von Lithium-Polymer-Batterien entsprechend einem der Ansprüche 9 bis 13, **dadurch gekennzeichnet, dass** die separat auf unterschiedliche Ableiter aufgebrachten Elektrodemassen mit der Separatorfolie als Zwischenlage kombiniert und laminiert werden und dann zu Flachzellen gemäß einem der Ansprüche 5 bis 7 oder zu Wickelzellen-Röhren gemäß einem der Ansprüche 1, 2 oder 3 geformt sind.

15. Spezielle Anordnung von Lithium-Polymer-Batterien entsprechend Anspruch 14, **dadurch gekennzeichnet, dass** bei den Flachzellen gemäß Anspruch 5 der Minus-Pol in der Ausbuchtung A und der Plus-Pol in der Vertiefung V integriert sind.

16. Spezielle Anordnung von Lithium-Polymer-Batterien entsprechend Anspruch 14, **dadurch gekennzeichnet, dass** beim Wickel-Typ entsprechend einem der Ansprüche 1, 2 oder 3 auf der Außenseite der Ausstülpung mit dem Durchmesser d der Minus-Pol und im anderen Teil der Wickel-Röhre auf der Innenseite der Plus-Pol integriert sind.

17. Spezielle Anordnung von Lithium-Polymer-Batterien entsprechend Anspruch 16, **dadurch gekennzeichnet, dass** der Wickel-Typ durch Aufwickeln des Laminates, bestehend aus Kathode, vorzugsweise einer Kathodenmasse auf geprimerter Al-Folie, und aus Anode, vorzugsweise einer Anodenmasse auf Cu-Folie, sowie dem Separator als Zwischenlage, um einen Dorn mit dem Durchmesser e hergestellt wird, wobei der Dorn eine Röhre mit dem Außendurchmesser e ist und optional in dem Batterie-Wickel verbleibt.

18. Spezielle Anordnung von Lithium-Polymer-Batterien entsprechend Anspruch 17, wobei der Dorn aus Metall oder vorzugsweise Kunststoff auf Basis von Fluorelastomeren besteht.

19. Spezielle Anordnung von Lithium-Polymer-Batterien entsprechend einem der Ansprüche 1 bis 18, **dadurch gekennzeichnet, dass** die hergestellten Batterien durch Hintereinanderschalten oder Parallelschalten als Energiespeicher, vorzugsweise Hochenergiespeicher, einsetzbar sind.

20. Spezielle Anordnung von Lithium-Polymer-Batterien entsprechend Anspruch 19, **dadurch gekennzeichnet, dass** das Zusammenschalten der Batterien durch Zusammenstecken oder über Steckleisten erfolgt.

21. Spezielle Anordnung von Lithium-Polymer-Batterien entsprechend einem der Ansprüche 1 bis 20, **dadurch ge-**

**kennzeichnet, dass** die Batterieanordnungen als Gerätebauteil integriert vorliegen.

22. Spezielle Anordnung von Lithium-Polymer-Batterien entsprechend einem der Ansprüche 1,2, 4 bis 7, **dadurch gekennzeichnet, dass** die Lithium-Polymer-Batterien mit integrierten Solarzellen und Laderegler durch Steckverbindungen Minus-Pol mit Plus-Pol hintereinander angeordnet sind.

23. Spezielle Anordnung von Lithium-Polymer-Batterien entsprechend einem der Ansprüche 3, 6 und 7, **dadurch gekennzeichnet, dass** die Lithium-Polymer-Batterien mit integrierten Solarzellen und Laderegler nebeneinander angeordnet sind und durch Steckleisten separat die Minus-Pole und separat die Plus-Pole miteinander in Parallelschaltung verbunden sind.

24. Spezielle Anordnung von Lithium-Polymer-Batterien entsprechend Anspruch 22 oder 23, **dadurch gekennzeichnet, dass** die erfindungsgemäßen Anordnungen von Lithium-Polymer-Batterien Solarzellen und Laderegler integriert enthalten.

25. Spezielle Anordnung von Lithium-Polymer-Batterien entsprechend einem der Ansprüche 22 bis 24, **dadurch gekennzeichnet, dass** die Batterien mit integrierten Solarzellen und Laderegler durch einfache U-Schienen oder bei mehrsträngigen Einheiten durch Doppel-U-Schienen längsseits verfestigt werden.

26. Spezielle Anordnung von Lithium-Polymer-Batterien entsprechend einem der Ansprüche 22 bis 25, **dadurch gekennzeichnet, dass** die erfindungsgemäße Batterieanordnung mit in Parallel- oder Serienschaltung geschalteten Batterien einen Sinus-Wechselrichter umfasst, um die erzielte Spannung auf Wechselspannung umzustellen.

**Claims**

1. Specific arrangement of lithium polymer batteries with several lithium polymer batteries arranged in succession with minus pole to plus pole by push-fit connections via a depression V and a protrusion A, with the opposite poles arranged on opposite sides of the battery respectively integrated in the protrusion A and depression V, **characterized in that** the lithium polymer battery is in the form of a coil cell tube which narrows at one end (c, d, e), and is inserted into at least one further analogous lithium polymer battery tube, the length of tube a being 5-20 cm and the length of the narrowed push-fit part c being 0.5-2 cm, and optionally the diameter of the tube b being 2.5-15 cm and the diameter of the push-fit part d being 1.5-10 cm, the internal diameter of the tube optionally corresponding to the outer diameter of the push-fit part, i.e. d = 1.5-10 cm, and the internal diameter of the push-fit part e optionally being 1-7.5 cm, such that the wall thickness of the lithium polymer battery tube b minus d = 1. 0 to 5 cm and, for the push-fit part, d minus e = 0.5 to 2.5 cm.

2. Specific arrangement of lithium polymer batteries with several lithium polymer batteries arranged in succession with pole overlaps at both ends of the batteries, with the minus poles integrated into the overlap regions and the plus poles integrated into the overlap regions connected in series to one another, **characterized in that** the lithium polymer battery is in the form of a coil cell tube which narrows at one end (c, d, e), and is inserted into at least one further analogous lithium polymer battery tube, the length of tube a being 5-20 cm and the length of the narrowed push-fit part c being 0.5-2 cm, and optionally the diameter of the tube b being 2.5-15 cm and the diameter of the push-fit part d being 1.5-10 cm, the internal diameter of the tube optionally corresponding to the outer diameter of the push-fit part, i.e. d = 1.5-10 cm, and the internal diameter of the push-fit part e optionally being 1-7.5 cm, such that the wall thickness of the lithium polymer battery tube b minus d = 1.0 to 5 cm and, for the push-fit part, d minus e = 0.5 to 2.5 cm.

3. Specific arrangement of lithium polymer batteries with several lithium polymer batteries arranged alongside one another and the minus poles integrated in the overlap regions and the plus poles integrated in the overlap regions connected separately in parallel to one another by push-fit bars, **characterized in that** the lithium polymer battery is in the form of a coil cell tube which narrows at one end (c, d, e), and is inserted into at least one further analogous lithium polymer battery tube, the length of tube a being 5-20 cm and the length of the narrowed push-fit part c being 0.5-2 cm, and optionally the diameter of the tube b being 2.5-15 cm and the diameter of the push-fit part d being 1.5-10 cm, the internal diameter of the tube optionally corresponding to the outer diameter of the push-fit part, i.e. d = 1.5-10 cm, and the internal diameter of the push-fit part e optionally being 1-7.5 cm, such that the wall thickness of the lithium polymer battery tube b minus d = 1.0 to 5 cm and, for the push-fit part, d minus e = 0.5 to 2.5 cm.

4. Specific arrangement of lithium polymer batteries according to Claim 1, **characterized in that** the lithium polymer battery is constructed with a depression V into which the plus pole is integrated and with a protrusion A into which the minus pole is integrated.

5. Specific arrangement of lithium polymer batteries according to any of Claims 1, 3 and 4, **characterized in that** the lithium polymer battery is in rectangular or square form as a flat cell and has a length a of 3-20 cm, preferably of 5-10 cm, and a width c of 0.5-20 cm, preferably of 1 to 10 cm, the depression V and the protrusion A optionally being arranged centred at opposite ends, and the dimensions d, e and f for the protrusion A optionally corresponding to those for the depression V and having the following values: d: 0.5-2 cm, e: 0.2-15 cm and f: 0.3-2.5 cm.

6. Specific arrangement of lithium polymer batteries according to any of Claims 1, 3 and 4, **characterized in that** the battery is in rectangular or square form as a flat cell and has a length a of 10-54 cm, preferably of 10-30 cm, and a width c of 5-30 cm, the depression V and the protrusion A optionally being arranged centred at opposite ends, and the dimensions d, e, f for the protrusion A corresponding to those of the depression V.

7. Specific arrangement of lithium polymer batteries according to any of Claims 1 to 3, **characterized in that** the battery is configured with pole overlaps, the pole overlaps being 1 to 5 cm.

8. Specific arrangement of lithium polymer batteries according to any of Claims 1, 2, 3, 4 and 5, **characterized in that** the lithium polymer batteries which can be connected by push-fit connection are curved and optionally, after push-fit connection, form a shaped circle wherein the diameter is 50 cm to 5 m and the number of individual batteries is optionally 10-2000.

9. Specific arrangement of lithium polymer batteries according to any of Claims 1 to 8, **characterized in that** the lithium polymer batteries are formed from cathode material, polymer gel separator and anode material, and are produced by extrusion coating of the cathode material on primed Al output conductor and extrusion coating of the anode material on Cu output conductor with subsequent introduction of the separator and lamination.

10. Specific arrangement of lithium polymer batteries according to Claim 9, **characterized in that** the cathode material used comprises mixtures of 87-91 % oxides and phosphates of Ti, V, Cr, Mn, Fe, Co, Ni with 1-3 % lithium conductive salts, preferably lithium organoborates, 3-5 % MgO and 3-5 % polymer binders, such as modified styrene block polymers or fluoroelastomers, preferably terpolymers, and 1-2 % aprotic solvents, where the percentages are percentages by mass based on the particular total mass.

11. Specific arrangement of lithium polymer batteries according to Claim 9, **characterized in that** the anode material used comprises mixtures of 90-94 % synthetic or natural carbons or $TiO_2$ with 1-3 % lithium conductive salts and 3-5 % polymer binders and 1-2 % aprotic solvents.

12. Specific arrangement of lithium polymer batteries according to Claim 9, **characterized in that** the separator materials used are mixtures of 20-40 % MgO with 10-15 % lithium conductive salts and 15-25 % polymer binders, and 10-30 % aprotic solvents.

13. Specific arrangement of lithium polymer batteries according to any of Claims 9 to 12, **characterized in that** the cathode, anode and separator materials are mixed separately under dry ultrapure $N_2$ in a mixer at 20-60°C for 30 to 300 minutes, and then extruded separately in an extruder at 80-120°C, and they optionally have a thickness of 10-50 $\mu$m, preferably 15-40 $\mu$m.

14. Specific arrangement of lithium polymer batteries according to any of Claims 9 to 13, **characterized in that** the electrode materials applied separately to different output conductors are combined with the separator film as an intermediate layer and laminated, and then shaped to flat cells according to any of Claims 5 to 7 or to coil cell tubes according to any of Claims 1, 2 or 3.

15. Specific arrangement of lithium polymer batteries according to Claim 14, **characterized in that** the minus pole in the flat cells according to Claim 5 is integrated in the protrusion A, and the plus pole in the depression V.

16. Specific arrangement of lithium polymer batteries according to Claim 14, **characterized in that**, in the coil type according to any of Claims 1, 2 and 3, the minus pole is integrated on the outside of the protuberance with the diameter d, and the plus pole in the other part of the coil tubes on the inside.

**17.** Specific arrangement of lithium polymer batteries according to Claim 16, **characterized in that** the coil type is produced by winding the laminate consisting of cathode, preferably a cathode material on primed Al foil, and of anode, preferably an anode material on Cu foil, and the separator as an intermediate layer, around a pin with diameter e, the pin being a tube with external diameter e and optionally remaining within the battery coil.

**18.** Specific arrangement of lithium polymer batteries according to Claim 17, wherein the pin consists of metal or preferably plastic based on fluoroelastomers.

**19.** Specific arrangement of lithium polymer batteries according to any of Claims 1 to 18, **characterized in that** the batteries produced are usable by connection in succession or in parallel as energy stores, preferably high-energy stores.

**20.** Specific arrangement of lithium polymer batteries according to Claim 19, **characterized in that** the batteries are connected to one another by push-fit connection or via push-fit bars.

**21.** Specific arrangement of lithium polymer batteries according to any of Claims 1 to 20, **characterized in that** the battery arrangements are present in integrated form as an appliance component.

**22.** Specific arrangement of lithium polymer batteries according to any of Claims 1, 2, 4 to 7, **characterized in that**, the lithium polymer batteries are arranged in succession with minus pole to plus pole together with integrated solar cells and charging regulators by push-fit connections.

**23.** Specific arrangement of lithium polymer batteries according to any of Claims 3, 6 and 7, **characterized in that** the lithium polymer batteries are arranged alongside one another with integrated solar cells and charging regulators, and the minus poles and the plus poles are connected separately in parallel to one another by push-fit bars.

**24.** Specific arrangement of lithium polymer batteries according to Claim 22 or 23, **characterized in that** the inventive arrangements of lithium polymer batteries comprise solar cells and charging regulators in integrated form.

**25.** Specific arrangement of lithium polymer batteries according to any of Claims 22 to 24, **characterized in that** the batteries comprising integrated solar cells and charging regulators are longitudinally reinforced by simple U-rails or, in the case of multistrand units, by double U-rails.

**26.** Specific arrangement of lithium polymer batteries according to any of Claims 22 to 25, **characterized in that**, the inventive battery arrangement with batteries connected in parallel or series comprises a sine wave inverter to convert the voltage achieved to alternating current.

**Revendications**

**1.** Agencement spécial de batteries lithium-polymère, plusieurs batteries lithium-polymère étant disposées les unes derrière les autres, au moyen de liaisons à emboîtement, pôle moins avec pôle plus, par l'intermédiaire d'une cavité V et d'un téton A, les pôles opposés, disposés sur des côtés opposés, de la batterie étant chacun intégrés dans le téton A ou la cavité V, **caractérisé en ce que** la batterie lithium-polymère est réalisée sous la forme de tube à cellules à enroulement, effilé à une extrémité (c, d, e), et emboîtée en au moins un autre tube de batterie lithium-polymère analogue, la longueur des tubes a étant dans la fourchette comprise entre 5 et 20 cm et la longueur de la partie à emboîtement c effilée étant dans la fourchette comprise entre 0,5 et 2 cm, et où, en option, le diamètre des tubes b est dans la fourchette comprise entre 2,5 et 15 cm et le diamètre de la partie à emboîtement d est dans la fourchette comprise entre 1,5 et 10 cm, où, en option, le diamètre intérieur des tubes correspond au diamètre extérieur de la partie à emboîtement, c'est-à-dire que d = 1,5 à 10 cm, et où, en option, le diamètre intérieur de la partie à emboîtement e est dans la fourchette comprise entre 1 et 7,5 cm, de manière que l'épaisseur de paroi du tube de batterie lithium-polymère b moins d = 1,0 0 à 5 cm et, pour la partie à emboîtement, d moins e = 0,5 à 2,5 cm.

**2.** Agencement spécial de batteries lithium-polymère, plusieurs batteries lithium-polymère étant disposées les unes derrière les autres, avec des chevauchements de pôles sur les deux faces frontales des batteries, les pôles moins intégrés dans les zones de transition et les pôles plus intégrés dans les zones de transition étant reliés ensemble en un branchement en série, **caractérisé en ce que** la batterie lithium-polymère est réalisée sous la forme de tube à cellules à enroulement, effilé à une extrémité (c, d, e), et emboîtée en au moins un autre tube de batterie lithium-polymère analogue, la longueur des tubes a étant dans la fourchette comprise entre 5 et 20 cm et la longueur de la partie à emboîtement c effilée étant dans la fourchette comprise entre 0,5 et 2 cm, et où, en option, le diamètre des tubes b est dans la fourchette comprise entre 2,5 et 15 cm et le diamètre de la partie à emboîtement d est dans la fourchette comprise entre 1,5 et 10 cm, où, en option, le diamètre intérieur des tubes correspond au diamètre extérieur de la partie à emboîtement, c'est-à-dire que d = 1,5 à 10 cm, et où, en option, le diamètre intérieur de la partie à emboîtement e est dans la fourchette comprise entre 1 et 7,5 cm, de manière que l'épaisseur de paroi du tube de batterie lithium-polymère b moins d = 1,0 0 à 5 cm et, pour la partie à emboîtement, d moins e = 0,5 à 2,5 cm.

3. Agencement spécial de batteries lithium-polymère, plusieurs batteries lithium-polymère étant disposées les unes à côté des autres, et, au moyen de barrettes à emboîtement, séparément, les pôles moins intégrés dans les zones de transition et, séparément, les pôles plus intégrés dans les zones de transition étant reliés ensemble en un branchement en série, **caractérisé en ce que** la batterie lithium-polymère est réalisée sous la forme de tube à cellules à enroulement, effilé à une extrémité (c, d, e), et emboîtée en au moins un autre tube de batterie lithium-polymère analogue, la longueur des tubes a étant dans la fourchette comprise entre 5 et 20 cm et la longueur de la partie à emboîtement c effilée étant dans la fourchette comprise entre 0,5 et 2 cm, et où, en option, le diamètre des tubes b est dans la fourchette comprise entre 2,5 et 15 cm et le diamètre de la partie à emboîtement d est dans la fourchette comprise entre 1,5 et 10 cm, où, en option, le diamètre intérieur des tubes correspond au diamètre extérieur de la partie à emboîtement, c'est-à-dire que d = 1,5 à 10 cm, et où, en option, le diamètre intérieur de la partie à emboîtement e est dans la fourchette comprise entre 1 et 7,5 cm, de manière que l'épaisseur de paroi du tube de batterie lithium-polymère b moins d = 1,0 à 5 cm et, pour la partie à emboîtement, d moins e = 0,5 à 2,5 cm.

4. Agencement spécial de batteries lithium-polymère selon la revendication 1, **caractérisé en ce que** la batterie lithium-polymère est construite avec une cavité V, dans laquelle le pôle plus est intégré, et un téton A, dans lequel le pôle moins est intégré.

5. Agencement spécial de batteries lithium-polymère selon l'une des revendications 1, 3 et 4, **caractérisé en ce que** la batterie lithium-polymère est conformée en cellule plate, rectangulaire ou carrée, et présente une longueur a dans la fourchette comprise entre 3 et 20 cm, de préférence entre 5 et 10 cm, et une largeur c dans la fourchette comprise entre 0,5 et 20 cm, de préférence entre 1 et 10 cm, où, en option, la cavité V, ainsi que le téton A, sont disposés de manière centrée sur des faces frontales opposées, et, en option, les dimensions d, e, f pour le téton A correspondant à celles de la cavité V et ont les valeurs suivantes : d: 0,5 à 2 cm, e : 0,2 à 15 cm et f: 0,3 à 2,5 cm.

6. Agencement spécial de batteries lithium-polymère selon l'une des revendications 1, 3 et 4, **caractérisé en ce que** la batterie lithium-polymère est conformée en cellule plate, rectangulaire ou carrée, et présente une longueur a dans la fourchette comprise entre 10 et 54 cm, de préférence entre 10 et 30 cm, et une largeur c dans la fourchette comprise entre 5 et 30 cm, où, en option, la cavité V, ainsi que le téton A, sont disposés de manière centrée sur des faces frontales opposées, et les dimensions d, e, f pour le téton A correspondant à celles de la cavité V.

7. Agencement spécial de batteries lithium-polymère selon l'une des revendications 1 à 3, **caractérisé en ce que** la batterie est réalisée avec des chevauchements de pôles, les chevauchements de pôles faisant de 1 à 5 cm.

8. Agencement spécial de batteries lithium-polymère selon l'une des revendications 1, 2, 3, 4 et 5, **caractérisé en ce que** les batteries lithium-polymère susceptibles d'être emboîtées sont incurvées et forment en option, après l'assemblage par emboîtement, un cercle complet, le diamètre étant dans la fourchette comprise entre 50 cm et 5 m et, en option, le nombre de batteries individuelles étant dans la fourchette comprise entre 10 et 20000.

9. Agencement spécial de batteries lithium-polymère selon l'une des revendications 1 à 8, **caractérisé en ce que** les batteries lithium-polymère sont composées d'une masse de cathode, d'un séparateur à gel polymère et d'une masse d'anode et sont fabriquées par revêtement par extrusion de la masse de cathode, sur un conducteur d'évacuation en Al ayant reçu une couche de fond, et revêtement par extrusion de la masse d'anode sur un conducteur d'évacuation en Cu, avec insertion subséquente du séparateur et laminage.

10. Agencement spécial de batteries lithium-polymère selon la revendication 9, **caractérisé en ce que** sont utilisés comme masse de cathode des mélanges composés de 87 à 91 % d'oxydes et de phosphates de Ti, V, Cr, Mn, Fe, Co, Ni avec de 1 à 3 % de sels conducteurs de lithium, de préférence des organoborates de Li, de 3 à 5 % de MgO et de 3 à 5 % de liants polymères, tels que des polymérisats en bloc styrène modifiés, ou des fluorélastomères, de préférence des terpolymères, et de 1 à 2 % de solvants aprotiques, les indications en % étant des pourcents en masse se référant à la masse globale respective.

11. Agencement spécial de batteries lithium-polymère selon la revendication 9, **caractérisé en ce que** sont utilisés comme masse d'anode des mélanges composés de 90 à 94 % de carbones synthétiques ou naturels, ou de $TiO_2$ avec de 1 à 3 % de sels conducteurs de lithium et de 3 à 5 % de liant polymère et de 1 à 2 % de solvants aprotiques.

12. Agencement spécial de batteries lithium-polymère selon la revendication 9, **caractérisé en ce que** sont utilisés comme masses de séparateur des mélanges composés de 20 à 40 % de MgO avec 10 à 15 % de sels conducteurs de lithium et de 15 à 25 % de liants polymères, ainsi que de 10 à 30 % de solvants aprotiques.

13. Agencement spécial de batteries lithium-polymère selon l'une des revendications 9 à 12, **caractérisé en ce que** les masses de cathode, d'anode et de séparateur sont mélangées, séparément, sous une atmosphère de $N_2$ très pur, sec, dans un mélangeur à une température dans la fourchette de 20 à 60°C, pendant 30 à 300 minutes et, ensuite, extrudées séparément dans une extrudeuse, à une température dans la fourchette comprise entre 80 et 120°C, en présentant une épaisseur de 10 à 50 $\mu$m, de préférence de 15 à 40 $\mu$m.

14. Agencement spécial de batteries lithium-polymère selon l'une des revendications 9 à 13, **caractérisé en ce que** les masses d'électrode, appliquées séparément sur différents conducteurs d'évacuation, sont combinées à la feuille de séparateur, en tant que couche intermédiaire, et laminées et, ensuite, formées en cellules plates selon l'une des revendications 5 à 7, ou en tube à cellules à enroulement, selon l'une des revendications 1, 2 ou 3.

15. Agencement spécial de batteries lithium-polymère selon la revendication 14, **caractérisé en ce que**, dans le cas des cellules plates selon la revendication 5, le pôle moins est intégré dans le téton A et le pôle plus est intégré dans la cavité V.

16. Agencement spécial de batteries lithium-polymère selon la revendication 14, **caractérisé en ce que**, dans le cas du type à enroulement correspondant à l'une des revendications 1, 2 ou 3, le pôle moins est intégré sur la face extérieure de la proéminence ayant le diamètre d et, dans l'autre partie du tube à enroulement, le pôle plus est intégré sur la face intérieure.

17. Agencement spécial de batteries lithium-polymère selon la revendication 16, **caractérisé en ce que** le type à enroulement est fabriqué par enroulement du laminé, composé de la cathode, de préférence d'une masse de cathode, sur une feuille de Al ayant reçu un apprêt, et de l'anode, de préférence une masse d'anode sur une feuille de Cu, ainsi que du séparateur faisant office de couche intermédiaire, autour d'un mandrin de diamètre e, le mandrin étant un tube de diamètre extérieur e et, en option, restant dans l'enroulement de batterie.

18. Agencement spécial de batteries lithium-polymère selon la revendication 17, **caractérisé en ce que** le mandrin est composé de métal ou, de préférence, de matière synthétique à base de fluorélastomères.

19. Agencement spécial de batteries lithium-polymère selon l'une des revendications 1 à 18, **caractérisé en ce que** les batteries fabriquées sont utilisables, par branchement les unes derrière les autres ou par branchement en parallèle, sous forme d'accumulateurs d'énergie, de préférence d'accumulateurs de haute quantité d'énergie.

20. Agencement spécial de batteries lithium-polymère selon la revendication 19, **caractérisé en ce que** le branchement ensemble des batteries s'effectue par emboîtement ensemble ou par l'intermédiaire de barrettes à emboîtement.

21. Agencement spécial de batteries lithium-polymère selon l'une des revendications 1 à 20, **caractérisé en ce que** les agencements de batteries se présentent sous la forme intégrée de composant d'appareil.

22. Agencement spécial de batteries lithium-polymère selon l'une des revendications 1, 2, 4 à 7, **caractérisé en ce que** les batteries lithium-polymère, avec des piles solaires intégrées et des régulateurs de charge intégrés, sont disposées les unes derrière les autres, pôle moins avec pôle plus, au moyen de liaisons à emboîtement.

23. Agencement spécial de batteries lithium-polymère selon l'une des revendications 3, 6 et 7, **caractérisé en ce que** les batteries lithium-polymère, avec des piles solaires intégrées et des régulateurs de charge, sont disposées les unes à côté des autres et sont reliées ensemble en branchement en parallèle au moyen de barrettes à emboîtement, séparément les pôles moins et séparément, les pôle plus.

24. Agencement spécial de batteries lithium-polymère selon la revendication 22 ou 23, **caractérisé en ce que** les agencements selon l'invention de batteries lithium-polymère contiennent, de manière intégrée, des piles solaires et des régulateurs de charge.

**25.** Agencement spécial de batteries lithium-polymère selon l'une des revendications 22 à 24, **caractérisé en ce que** les batteries, avec des piles solaires intégrées et des régulateurs de charge intégrés, sont renforcées côté longitudinal au moyen de glissières en U simple, ou de glissières en U doubles, en cas d'unités à plusieurs tronçons.

**26.** Agencement spécial de batteries lithium-polymère selon l'une des revendications 22 à 25, **caractérisé en ce que** l'agencement de batteries selon l'invention, avec des batteries branchées en circuit parallèle ou série, comprend un onduleur sinusoïdal, pour convertir la tension obtenue en une tension alternative.

FIG. 1

# FIG. 2

EP 1 922 776 B1

FIG. 3

FIG. 4

FIG. 5

FIG. 6

FIG. 7a

FIG. 7b

# FIG. 8a

**S:**

# FIG. 8b

**P:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6187469 B

**In der Beschreibung aufgeführte Nicht-Patentliteratur**

- Conrad Hauptkatalog. 2005, 639-644
- Handbook of porous Solids. Verlag Wiley-VCH, 2002, vol. 3, 1766-1963
- Ullmann's Encyclopedia of Industrial Chemistry. Verlag VCH, 1997, vol. 11, 394-429